# EUROPEAN PATENT SPECIFICATION

(11) **EP 0 439 269 B1**
(45) Date of publication and mention of the grant of the patent: **29.05.1996**
(21) Application number: 91300255.6
(22) Date of filing: 15.01.1991
(51) Int. Cl.: H04N 1/387

(54) **Printer for printing an image and a caption**
Drucker zum Bild- und Schriftbilddruck
Imprimante pour imprimer des images et des légendes

(30) Priority: 20.01.1990 JP 10924/90
(43) Date of publication of application: 31.07.1991
(73) Proprietor: SONY CORPORATION, Tokyo 141 (JP)
(72) Inventor: Fujiwara, Masahiro, Patents Division, Shinagawa-ku, Tokyo 141 (JP); Kariya, Izumi, Patents Division, Shinagawa-ku, Tokyo 141 (JP)
(74) Representative: Cotter, Ivan John

(56) References cited:
- EP-A- 0 119 369
- EP-A- 0 312 301
- GB-A- 2 215 554

## Description

This invention relates to printers for printing an image and a caption.

Video printers for producing hard copies of video images generated by image sources such as tuners, video tape recorders (VTRs), video-disc playback units and computers are known. A video printer is normally connected to an image display monitor that displays a source (input) image to be printed. Examples of video printers are disclosed in Japanese patent specification 127890/63 (JP-A-1 296 868) and 161801/63 (JP-A-2 013 004).

It is desirable to print character information such as a title for and/or description of an image along with the image to be printed. Hereinafter, the term "caption" refers to a collection of symbols including alphanumeric characters and the like selected to be printed along with an image while the term "character information" refers to symbols which can be used to create a caption. Thus, for example, character information can include an alphabet while a caption includes a word or words formed by combining selected letters of the alphabet.

One system for accomplishing this creates a caption by operation of a computer and its keyboard, jointly displays a still image and the caption on a monitor, and transmits the caption along with the still image to a printer. This system is disclosed in Japanese patent specification 1179/63 (JP-A-1 178 430).

With respect to a printer, it is possible to create and print a caption along with printed information in a similar manner. However, when the known method is applied to a printer, since a caption is input by means of another computer which is not used for the printer, it is necessary to operate a keyboard, that is, type in the caption information via a keyboard. In addition, the caption being input must be transferred from the computer to the printer through an RS-232-C interface or the like. As a result, the number of key strokes can increase thereby complicating the operation. In addition, a printer that is not equipped with such an interface cannot print the caption.

UK Patent Application Publication No GB-A-2 215 554 discloses a printer, according to the prc-charactcrising part of claim 1 hereof, for printing an image and a caption relating thereto. The printer comprises: a symbol selection device for selecting symbols for printing as a caption, the device comprising a keypad and a processing unit; a display device for displaying the selected symbols; and a printing mechanism for printing an image and said selected symbols. The keypad, processing unit and display device are constituted by a personal computer. A film scanner scans an image on a photographic film. The printing mechanism is constituted by an electrostatic plotter which prints the scanned image and symbols selected via the personal computer. To this end, a data comparator combines the scanned image data produced by the film scanner and the symbols selected via the personal computer.

According to the present invention there is provided a printer for printing an image and a caption relating thereto, the printer comprising:
a symbol selection device for selecting symbols for printing as a caption, the device comprising a keypad and a processing unit;
a display device for displaying the selected symbols; and
a printing mechanism for printing an image and said selected symbols;
characterised in that:
a first memory is operative to store a video image comprising a portion of a video signal supplied to a video input terminal of the printer;
a second memory is coupled between the first memory and the symbol selection device, the second memory being operative to store symbols selected by the symbol selection device for printing as a caption;
the printing mechanism is coupled to the first and second memories for printing said video image stored in the first memory and the selected symbols stored in the second memory;
a symbol generator is coupled to the symbol selection device, the symbol generator being operative under control of said processing unit to generate a display signal representative of the selected symbols;
a signal mixer is coupled to the symbol generator and to the first memory, the signal mixer being operative to mix said video image stored in the first memory and said display signal, generated by the symbol generator, representative of the selected symbols, thereby to produce a mixed video output signal; and
the display device is coupled to receive said mixed video output signal of the signal mixer whereby the selected symbols can be displayed together with said video image prior to printing of said video image and said caption.

The invention will now be described by way of example with reference to the accompanying drawings, throughout which like parts are referred to by like references, and in which:
Figure 1 is a block diagram of an embodiment of printer according to the present invention;
Figure 2 is a schematic diagram of a key switch;
Figure 3 is a flow chart of the operation of the embodiment of Figure 1; and
Figure 4 is a schematic diagram of a display screen.

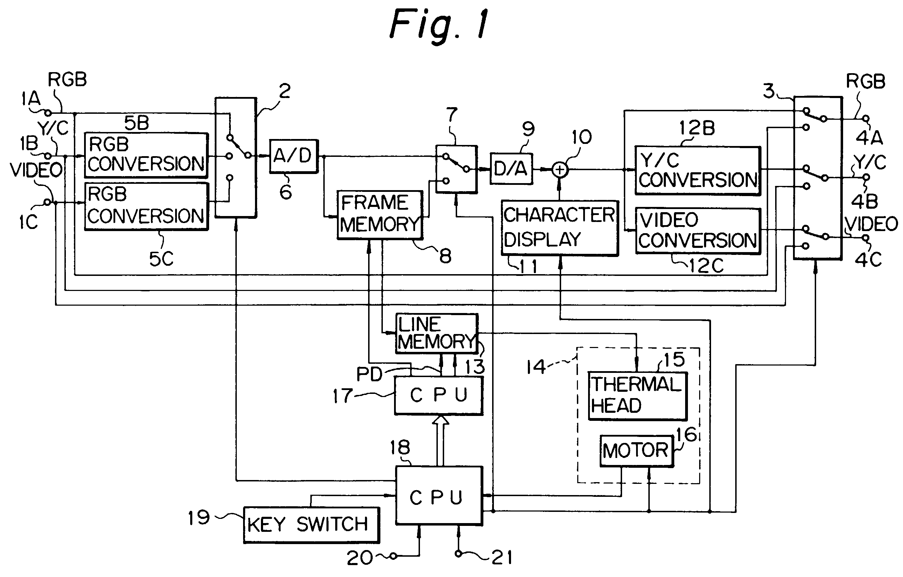

In Figure 1 there is illustrated a circuit diagram of a system for adding a caption or the like to image information so that the caption and print information can be printed together. The system receives as two basic inputs an image signal and a caption information signal. The system then provides as an output either the image signal or a processed signal comprising the image signal altered to include the caption information.

The system comprises input terminals 1A, 1B and 1C, an input selection switch 2, and output terminals 4A, 4B and 4C. The input terminal 1A is a terminal for input of an RGB signal of the image signal. The input terminal 1B is a terminal for input of a luminance signal Y and a colour signal C of the image signal. The input terminal 1C is a video terminal for input of a composite colour video signal of the image signal.

An image source such as a VTR, video-disc playback unit, tuner, or computer is connected to the input terminals 1A, 1B and 1C. Converting circuits 5B and 5C serve to convert the input signals at the terminals 1B and 1C, respectively, into an RGB signal and are connected to the input terminals 1B and 1C, respectively. Then one of either the RGB signal at terminal 1A or the input signals at terminals 1B or 1C converted into RGB signals is selected via appropriate actuation of input selection switch 2 for further processing.

A mode selection switch 3 switches between one mode for sending the input signals at terminals 1A, 1B and 1C directly to the output terminals 4A, 4B and 4C, respectively, and another mode for sending the signal processed by the printer to the output terminals 4A, 4B and 4C. The signal processed by the printer is a signal including a stored image signal, and characters, symbols, and so forth added to the image signal.

A monitor is connected to the output terminals 4A, 4B and 4C and the signal output by the system is displayed on the monitor.

The RGB signal from the input selection switch 2 is converted into a digital signal by an analogue-to-digital (A/D) converter 6. The output signal of the A/D converter 6 is sent both to one of the input terminals of a switch circuit 7 and to a frame memory 8. The frame memory 8 stores one frame of data to be printed. A signal read from the frame memory 8 is sent to the other input terminal of the switch circuit 7. For a print image, a field or an area obtained by dividing one screen can be used instead of a frame.

The output data of the switch circuit 7 is sent to a digital-to-analogue (D/A) converter 9 which restores the digital data into an analogue signal. The output signal of the D/A converter 9 is then supplied to a mixer 10. The mixer 10 mixes the image data in the form of the analogue signal from the D/A converter 9 with character data to be displayed on the monitor supplied by a character display 11. The display of the character data is necessary for displaying both a mode selection menu of the printer and fonts for the creation of caption data. The character display data signal is superimposed on the image data signal.

The output signal from the mixer 10 is output through the mode selection switch 3 to the terminals 4A, 4B and 4C. As illustrated, the signal is provided directly to the terminal 4A in its RGB format form. An RGB to Y/C conversion circuit 12B is interposed between the mixer 10 and the terminal 4B so as to form a luminance signal Y and a colour signal C at the terminal 4B. An RGB to video signal conversion circuit 12C is interposed between the mixer 10 and the terminal 4C so as to form a video signal at the terminal 4C.

The RGB data stored in the frame memory 8 in addition to being supplied to the switch circuit 7 is supplied to a line memory 13. An output signal from the line memory 13 is sent to a thermal head 15 of a printing mechanism 14 represented by a broken line in Figure 1. The preferred form of the printing mechanism 14 is a colour video printer that utilizes a sublimation type thermal transfer method.

Like a known colour video printer, the print mechanism 14 comprises a platen for feeding print paper, a mechanism for sending the print paper to the platen and for exiting the print paper upon completion of the print operation, an ink ribbon having thermally sublimated yellow, cyan and magenta ink portions in succession, the thermal head 15 for effecting dot printing, a motor 16 for rotating the platen, and so forth. The thermal head 15 and the ink ribbon are employed to print in colours the stored image onto the print paper as it is rolled on the platen.

A CPU 17 controls the memories 8 and 13 and the head 15. The CPU 17 controls the write and read operations for the frame memory 8 and the line memory 13. The CPU 17 sends to the line memory 13 caption data PD which is additional character information used to form caption or description images and so forth. A word or phrase correlated to the caption data PD is printed in black characters along with the image, but out of image print image, that is, on a margin.

A CPU 18 controls the system. A key switch 19 is connected to the CPU 18. The CPU 18 is equipped with a terminal 20 for receiving a remote control signal and a terminal 21 for connecting the system to another unit (for example, via an RS-232-C interface).

In addition, output signals of a rotation detector and a sensor associated with the motor 16 of the print mechanism 14 are sent to the CPU 18. In controlling the system, the CPU 18 sends control data and caption data to the CPU 17. The CPU 18 is operative to control the input selection switch 2, the switch circuit 7, the character display circuit 11, the motor 16, and the mode selection switch 3. In addition, the CPU 18 and the key switch 19 serve to control the input operation of a caption and to store the caption data, as is described below.

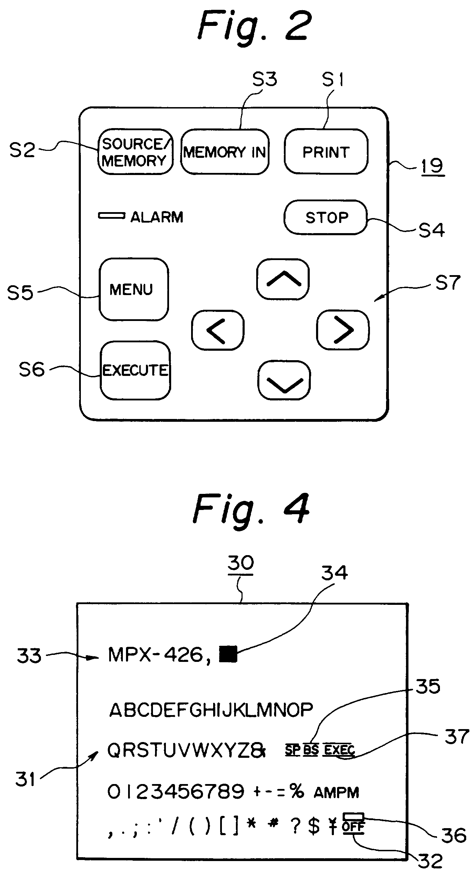

The key switch 19 is preferably a key pad as shown in Figure 2 which comprises a plurality of switches. The function of each switch of the key switch 19 will now be described.

Switch S1: Labelled 'PRINT', this switch is a print switch. When switch S1 is appropriately actuated, the print operation of the stored image and caption data is commenced.

Switch S2: Labelled 'SOURCE/MEMORY', this is a switch for controlling the switch circuit 7 which switches between the input (source) signal and the RGB signal stored in the frame memory 8.

Switch S3: Labelled 'MEMORY IN', this is a switch for storing a signal in the frame memory 8. When this switch S3 is appropriately actuated, the input image is stored in the frame memory 8 under the control of the CPUs 17 and 18.

Switch S4: Labelled 'STOP', this is a stop switch. When this switch is actuated, the printed operation and so forth are stopped.

Switch S5: Labelled 'MENU', this is a menu switch for displaying a menu and for clearing the menu display on a display screen.

Switch S6: Labelled 'EXECUTE', this is a switch for effecting reading selected character data and for executing any function in the caption selection mode.

Cursor switches S7: These switches are employed as cursor keys for moving the cursor on the screen to a desired position.

By operating the switches S5 and S6 and the cursor key S7, a caption is created.

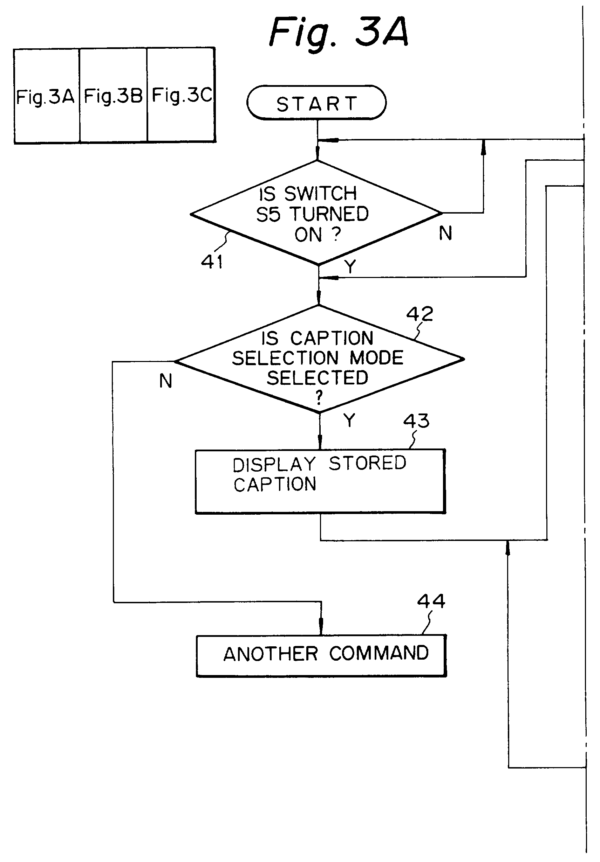

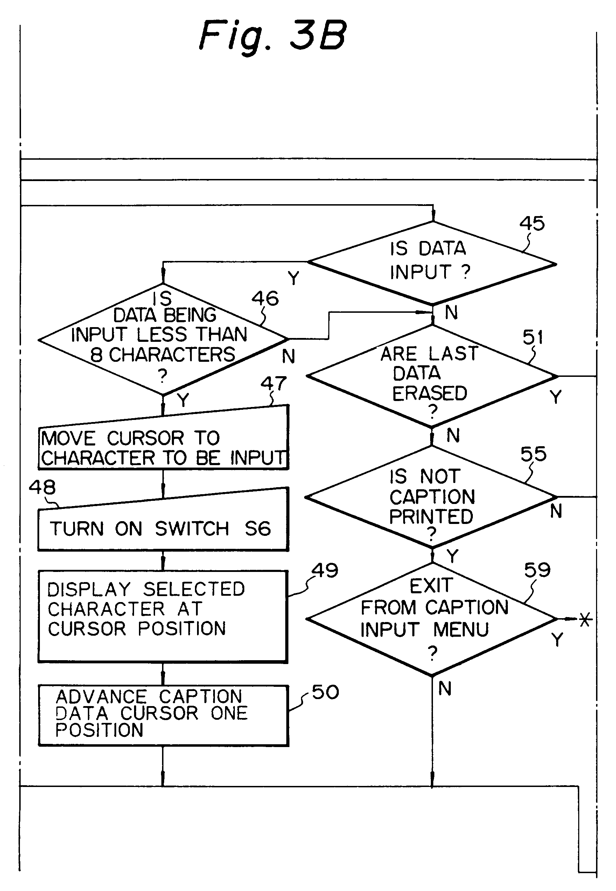

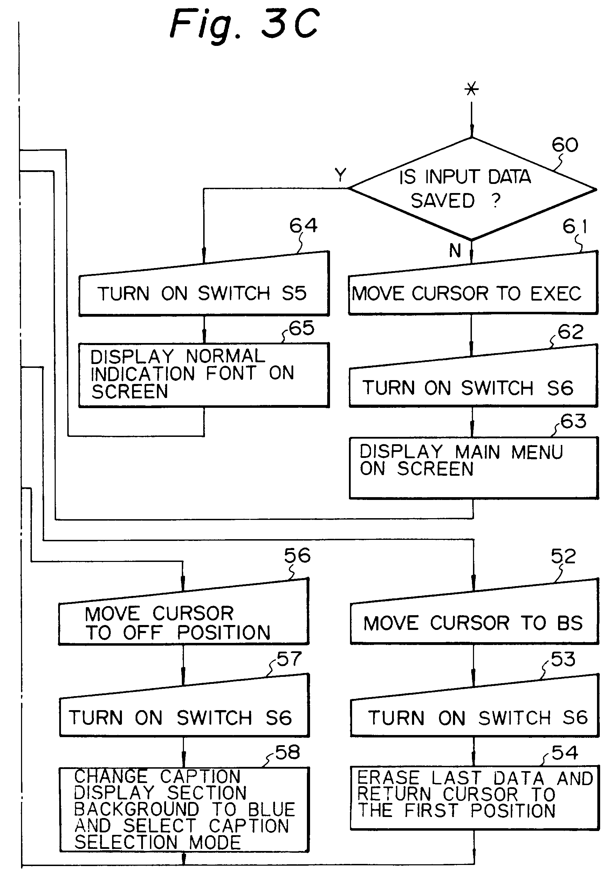

With reference to the flow chart illustrated in Figures 3A, 3B and 3C, the operation of the system will now be described.

In a first determination step 41, it is determined whether the switch S5 (labelled 'MENU') is turned on (that is, actuated), and if yes, the monitor (that is, the video display screen) connected to the printer passes from a normal display mode into a menu display mode wherein a plurality of menus are displayed on the screen. Examples of such menus are a caption menu for inputting caption data, a monitor menu for setting up an output signal which is sent to the monitor (that is, the selection state of the mode selection switch 3), an input setting menu for setting the selection state of the input selection switch 2, and a print menu for setting up the print operation, for example, setting a number of sheets to be printed, selection of an image to be printed, and so forth.

In step 42, it is determined whether a caption selection mode is selected. When the caption selection mode is selected, the currently stored caption is displayed in step 43. If another mode is selected, then the other selected mode is effected in step 44 as another command.

Figure 4 is an example of the monitor screen display via which the caption is selected. A display section 30 displays a character information display 31 including symbols such as alphabet characters, symbols, and so forth used for the creation of a caption. When the cursor keys S7 are operated, a first cursor 32 is moved over the various characters, which can be selected one at a time. The stored caption and the currently created caption are displayed at a caption display section 33 which is located at an upper portion of the display section 30. A second cursor 34 identifies the position of a character being created at the caption display section 33.

As illustrated, the character information display 31 contains control symbols 35 ('BS'), 36 ('OFF' or 'ON', it varies as will be explained below), and 37 ('EXEC') in addition to the characters for the caption. The functions of the control symbols are explained below.

Caption data selected by the operation of the key switch 19 are sent to the CPU 18 where they are stored in the memory of the CPU 18. In addition, the character display circuit 11 is controlled by the CPU 18 and thereby displays a particular display on the monitor screen.

With reference again to Figures 3A to 3C, when the cursor keys S7 are operated and a character or symbol is selected for input into the caption being created, in step 45, it is determined whether such character data are to be input, and if yes, in step 46, it is determined whether or not the number of characters of the input data (that is, the currently being created caption) is less than a particular number, for example, less than eight characters. When the number of characters of the input data is less than eight characters, the cursor 32 is moved to the position of a character to be input in step 47. After all characters for the currently being created caption are designated, the switch S6 is turned on in step 48. Then, the designated character data are read and displayed at the position of the cursor 34 in the caption display section 33 in step 49. Thereafter, in step 50, the cursor 34 in the data display section 33 is moved one position forward, that is, from left to right, by one position.

If in step 46, it is determined that the caption data being input are greater than the particular number of characters, then the procedure advances to step 51 where it is determined whether previous caption data have been erased. If the last (previous) caption data are cleared (erased), the cursor 34 is moved to the position of the control symbol 35, labelled 'BS' (blank screen) in step 52. In step 53, the switch S6 is actuated to select the control command BS. And then in step 54, the last caption data are cleared and the cursor 34 is returned back to the first position in the display section 33. Then, the procedure returns to step 45.

The caption being created is sent from the CPU 18 to the CPU 17. Thereafter, with a particular timing, the caption is sent from the CPU 17 to the line memory 13. Then, the caption is printed along with the image.

To stop the caption from being printed in step 55, the cursor 32 is moved to the position of the control symbol 36 of 'OFF' in step 56, which upon selection, effects an 'OFF' command which terminates printing. Thereafter, the switch S6 is turned on in step 57 to effect such selection. Thus, inhibition of the print operation is set. In addition, the colour of the caption display 33 of the display section 30 is changed, preferably to blue. Moreover, in step 58, the characters of the control symbol 36 are changed to read 'ON' instead of 'OFF'. Of course, it is also possible to represent that the no-print state exists by blinking the caption display rather than changing the colour thereof.

When the caption selection mode is exited in step 59, the procedure proceeds to step 60 where it is determined whether or not the input data are saved. When the input data are saved, the cursor 32 is moved to the control symbol 37 in step 61. Thereafter, the switch S6 is turned on (step 62). Thus, the caption data input is stored. At that time, the display section 30 enters into the mode for displaying a plurality of menus in step 63.

In step 60, it is determined whether the input data were saved. When the input data are not saved, the switched S5 is turned on in step 64. Then, the monitor displays the normal indication font screen in step 65. Thereafter, the mode returns back to the state preceding the first step 41.

It is also possible to contain the image source and/or display unit in the printer itself. In such a case, the monitor would not be externally connected to the printer as it would comprise a portion thereof.

Thus, a caption can be added to an image in an easy operation while observing the screen of a display unit without utilization of a separately connected computer. In addition, since the caption to be added is displayed on the screen of the image display unit, it can be readily checked by viewing that display unit rather than another unit.

## Claims

1. A printer for printing an image and a caption relating thereto, the printer comprising:
a symbol selection device (19, 18) for selecting symbols for printing as a caption, the device comprising a keypad (19) and a processing unit (18);
a display device (30) for displaying the selected symbols; and
a printing mechanism (14) for printing an image and said selected symbols;
characterised in that:
a first memory (8) is operative to store a video image comprising a portion of a video signal supplied to a video input terminal (1) of the printer;
a second memory (13) is coupled between the first memory (8) and the symbol selection device (19, 18), the second memory (13) being operative to store symbols selected by the symbol selection device for printing as a caption;
the printing mechanism (14) is coupled to the first and second memories (8, 13) for printing said video image stored in the first memory and the selected symbols stored in the second memory;
a symbol generator (11) is coupled to the symbol selection device (19, 18), the symbol generator being operative under control of said processing unit (18) to generate a display signal representative of the selected symbols;
a signal mixer (10) is coupled to the symbol generator (11) and to the first memory (8), the signal mixer being operative to mix said video image stored in the first memory and said display signal, generated by the symbol generator, representative of the selected symbols, thereby to produce a mixed video output signal; and
the display device (30) is coupled to receive said mixed video output signal of the signal mixer (10) whereby the selected symbols can be displayed together with said video image prior to printing of said video image and said caption.

2. A printer according to claim 1, which is provided with a plurality of said video input terminals (1A, 1B, 1C) and a switch (2) for selecting one of the video input terminals to be coupled to the first memory (8).

3. A printer according to claim 2, wherein said video input terminals comprise a first input terminal (1A) for receiving an RGB video signal, a second input terminal (1B) for receiving a luminance signal Y and a colour signal C, and a third input terminal (1C) for receiving a composite colour video signal, wherein said second input terminal (1B) is coupled to the switch (2) via a Y/C to RGB signal conversion unit (5B), and wherein said third input terminal (1C) is coupled to the switch (2) via a composite to RGB signal conversion unit (5C).

4. A printer according to claim 1, claim 2 or claim 3, wherein the printing mechanism (14) comprises a sublimation type thermal transfer printing mechanism.

5. A printer according to any one of the preceding claims, which is operative to print said caption on a margin of said image.

6. A printer according to any one of claims 1 to 5, wherein said display means (30) is provided as a peripheral unit.

7. A printer according to any one of claims 1 to 5, wherein said display means (30) is provided in a body of the printing mechanism (14).

8. A printer according to any one of the preceding claims, wherein operation of the keypad (19) of the symbol selection device (19, 18) causes a cursor (32, 34) to be moved on the display device (30)

9. A printer according to any one of the preceding claims, which is operable in a mode for selecting said symbols and said mode is entered by operator selection.

10. A printer according to claim 9, wherein, in said mode, first and second areas (31, 33) are formed on a screen of said display device (30), a plurality of selectable symbols are displayed on said first area (31), and symbols selected from said selectable symbols by the operator are displayed on said second area (33) for viewing by the operator.

11. A printer according to claim 1, wherein a control for registering said caption for printing is provided.

12. A printer according to claim 1, wherein a control for selectively printing said caption is provided.

## Patentansprüche

1. Drucker zum Drucken eines Bildes und eines damit in Beziehung stehenden Schriftbildes, wobei der Drucker aufweist:
eine Symbolauswahleinrichtung (19, 18) zur Auswahl von Schriftbildsymbolen zum Drucken, wobei die Einrichtung einen Tastenblock (19) und eine Verarbeitungseinheit (18) aufweist;
eine Anzeigeeinrichtung (30) zur Anzeige der ausgewählten Symbole; und
einen Druckermechanismus (14) zum Drucken eines Bildes und der ausgewählten Symbole;
dadurch gekennzeichnet, daß
ein erster Speicher (8) ein Videobild speichert, welches einen Teil eines Videosignals aufweist, das zum Videoeingangsanschluß (1) des Druckers geliefert wird;
ein zweiter Speicher (13) zwischen dem ersten Speicher (8) und der Symbolauswahleinrichtung (19, 18) gekoppelt ist, wobei der zweite Speicher (13) Symbole speichert, die durch die Schriftbildsymbolauswahleinrichtung zum Drucken ausgewählt wurden;
der Druckermechanismus (14) mit dem ersten und zweiten Speicher (8, 13) gekoppelt ist, um das Videobild, welches im ersten Speicher gespeichert ist, und die ausgewählten Symbole, die im zweiten Speicher gespeichert sind, zu drucken;
ein Symbolgenerator (11) mit der Symbolauswahleinrichtung (19, 18) gekoppelt ist, wobei der Symbolgenerator aufgrund der Steuerung der Verarbeitungseinheit (18) ein Anzeigesignal erzeugt, das für die ausgewählten Symbole repräsentativ ist;
ein Signalmischglied (10) mit dem Symbolgenerator (11) und dem ersten Speicher (8) gekoppelt ist, wobei das Symbolmischglied das Videobild, welches im ersten Speicher gespeichert ist, und das Anzeigesignal, das durch den Symbolgenerator erzeugt wird, welches für die ausgewählten Symbole repräsentativ ist, mischt, wodurch ein gemischtes Videoausgangssignal erzeugt wird; und
die Anzeigeeinrichtung (30) so gekoppelt ist, daß sie das gemischte Videoausgangssignal des Signalmischglieds (10) empfängt, wodurch die ausgewählten Symbole zusammen mit dem Videobild vor dem Drucken des Videobilds und des Schriftbilds angezeigt werden können.

2. Drucker nach Anspruch 1, der mit mehreren Videoeingangsanschlüssen (1A, 1B, 1C) und mit einem Schalter (2) zur Auswahl einer der Videoeingangsanschlüsse, die mit dem ersten Speicher (8) koppelbar sind, versehen ist.

3. Drucker nach Anspruch 2, wobei die Videoeingangsanschlüsse einen ersten Eingangsanschluß (1A) zum Empfang eines RGB-Videosignals, einen zweiten Eingangsanschluß (1B) zum Empfang eines Luminanzsignals Y und eines Farbsignals C, und einen dritten Eingangsanschluß (1C) zum Empfang eines zusammengesetzten Farbvideosignals aufweisen, wobei der zweite Eingangsanschluß (1B) mit dem Schalter (2) über eine Y/C-RGB-Signalumsetzungseinheit (5B) und wobei der dritte Eingangsanschluß (1C) mit dem Schalter (2) über eine Zusammengesetztsignal-RGB-Signalumsetzungseinheit (5C) gekoppelt ist.

4. Drucker nach Anspruch 1, 2 oder 3, wobei der Drukkermechanismus (14) einen Sublimations-Thermotransferdruckmechanismus aufweist.

5. Drucker nach einem der vorhergehenden Ansprüche, der das Schriftbild auf einem Rand des Bilds druckt.

6. Drucker nach einem der Ansprüche 1 bis 5, wobei die Anzeigeeinrichtung (30) als periphere Einheit vorgesehen ist.

7. Drucker nach einem der Ansprüche 1 bis 5, wobei die Anzeigeeinrichtung (30) in einem Körper des Druckermechanismus (14) vorgesehen ist.

8. Drucker nach einem der vorhergehenden Ansprüche, wobei die Betätigung des Tastenblocks (19) der Symbolauswahleinrichtung (19, 18) bewirkt, daß ein Cursor (32, 34) auf der Anzeigeeinheit (30) verschoben wird.

9. Drucker nach einem der vorhergehenden Ansprüche, der in einem Modus zur Auswahl der Symbole betreibbar ist, und dieser Modus durch die Auswahl einer Bedienungsperson eingegeben wird.

10. Drucker nach Anspruch 9, wobei - in diesem Modus - ein erster und zweiter Bereich (31, 33) auf einem Bildschirm der Anzeigeeinrichtung (30) gebildet wird, mehrere auswählbare Symbole auf dem ersten Bereich (31) angezeigt werden, und Symbole, die aus auswählbaren Symbolen durch die Bedienungsperson ausgewählt werden, auf dem zweiten Bereich (33) angezeigt werden, damit sie durch die Bedienungsperson betrachtet werden können.

11. Drucker nach Anspruch 1, wobei eine Steuerung zur Speicherung des Schriftbilds zum Drucken vorgesehen ist.

12. Drucker nach Anspruch 1, wobei eine Steuerung zum selektiven Drucken des Schriftbilds bereitgestellt ist.

## Revendications

1. Imprimante pour imprimer une image et une légende relative à celle-ci, l'imprimante comprenant:
- un dispositif de sélection de symboles (19, 18) pour sélectionner des symboles pour les imprimer comme légende, le dispositif comprenant un clavier (19) et une unité de traitement (18);
- un dispositif d'affichage (30) pour afficher les symboles sélectionnés; et
- un mécanisme d'impression (14) pour imprimer une image et lesdits symboles sélectionnés,
caractérisée en ce que:
- une première mémoire (8) est opérante pour mémoriser une image vidéo constituant une partie d'un signal vidéo fourni à une borne d'entrée vidéo (1) de l'imprimante;
- une deuxième mémoire (3) est montée entre la première mémoire (8) et le dispositif de sélection de symboles (19, 18), la deuxième mémoire (13) étant opérante pour mémoriser les symboles sélectionnés par le dispositif de sélection de symboles pour impression comme légende;
- le mécanisme d'impression (14) est connecté aux première et deuxième mémoires (8, 13) pour imprimer ladite image vidéo mémorisée dans la première mémoire et les symboles sélectionnés mémorisés dans la deuxième mémoire;
- un générateur de symboles (11) est connecté au dispositif de sélection de symboles (19, 18), le générateur de symboles étant opérant sous la commande de ladite unité de traitement (18) pour produire un signal d'affichage représentatif des symboles sélectionnés;
- un mélangeur de signaux (10) est connecté au générateur de symboles (11) et à la première mémoire (8), le mélangeur de signaux étant opérant pour mélanger ladite image vidéo mémorisée dans la première mémoire et ledit signal d'affichage produit par le générateur de symboles pour produire par ce moyen un signal de sortie vidéo mélangé; et
- le dispositif d'affichage (30) est connecté pour recevoir ledit signal de sortie vidéo mélangé du mélangeur de signaux (10), ce par quoi les symboles sélectionnés peuvent être affichés avec ladite image vidéo avant d'imprimer ladite image vidéo et ladite légende.

2. Imprimante selon la revendication 1, qui est munie d'une pluralité desdites bornes d'entrée vidéo (1A, 1B, 1C) et d'un commutateur (2) pour sélectionner une des bornes d'entrée vidéo à connecter à la première mémoire (8).

3. Imprimante selon la revendication 2, dans laquelle lesdites bornes d'entrée vidéo comprennent une première borne d'entrée (1A) pour recevoir un signal vidéo RVB, une deuxième borne d'entrée (1B) pour recevoir un signal de luminance Y et un signal de chrominance C, et une troisième borne d'entrée (1C) pour recevoir un signal vidéo couleur composite, dans laquelle ladite deuxième borne d'entrée (1B) est connectée au commutateur (2) par l'intermédiaire d'une unité de conversion de signal Y/C en signal RVB (5B), et dans laquelle ladite troisième borne d'entrée (1C) est connectée au commutateur (2) par l'intermédiaire d'une unité de conversion de signal composite en signal RVB (5C).

4. Imprimante selon la revendication 1, 2 ou 3, dans laquelle le mécanisme d'impression (14) comprend un mécanisme d'impression à transfert thermique du type à sublimation.

5. Imprimante selon l'une quelconque des revendications précédentes, qui est opérante pour imprimer ladite légende dans une marge de ladite image.

6. Imprimante selon l'une quelconque des revendications 1 à 5, dans laquelle lesdits moyens d'affichage (30) sont prévus comme unité périphérique.

7. Imprimante selon l'une quelconque des revendications 1 à 5, dans laquelle lesdits moyens d'affichage (30) sont prévus dans un corps du mécanisme d'impression (14).

8. Imprimante selon l'une quelconque des revendications précédentes, dans laquelle l'actionnement du clavier (19) du dispositif de sélection de symboles (19, 18) amène un curseur (32, 34) à être déplacé sur le dispositif d'affichage (30).

9. Imprimante selon l'une quelconque des revendications précédentes, qui peut fonctionner dans un mode prévu pour sélectionner lesdits symboles, et ledit mode est sélectionné par l'opérateur.

10. Imprimante selon la revendication 9, dans laquelle, dans ledit mode, des première et deuxième zones (31, 33) sont formées sur un écran dudit dispositif d'affichage (30), une pluralité de symboles sélectionnables sont affichés dans ladite première zone (31), et les symboles sélectionnés parmi lesdits symboles sélectionnables par l'opérateur sont affichés dans ladite deuxième zone (33) pour observation par l'opérateur.

11. Imprimante selon la revendication 1, dans laquelle une commande pour enregistrer ladite légende à imprimer est prévue.

12. Imprimante selon la revendication 1, dans laquelle une commande pour imprimer sélectivement ladite légende est prévue.
